# EUROPEAN PATENT SPECIFICATION

(11) **EP 3 333 082 B1**
(45) Date of publication and mention of the grant of the patent: **17.06.2020**
(21) Application number: 16425111.8
(22) Date of filing: 12.12.2016
(51) Int. Cl.: B64D 27/26, B64D 31/12, G01B 21/32, G01M 15/04, G01M 15/14, G01L 1/16, F01D 17/00, F01D 21/00, F01D 25/00

(54) **THRUST MEASURING DEVICE FOR A PROPULSION SYSTEM**
SCHUBMESSVORRICHTUNG FÜR EIN ANTRIEBSSYSTEM
DISPOSITIF DE MESURE DE POUSSÉE POUR SYSTÈME DE PROPULSION

(43) Date of publication of application: 13.06.2018
(73) Proprietor: Ge Avio S.r.l., 10040 Rivalta di Torino (TO) (IT)
(72) Inventor: Baladi, Mehdi Milani, 10040 Rivalta di Torino (IT)
(74) Representative: Iannone, Carlo Luigi

(56) References cited:
- EP-A2- 2 042 429
- EP-A2- 2 641 832
- WO-A1-2013/184924
- FR-A1- 3 017 458
- GB-A- 2 338 793
- GB-A- 2 361 318
- US-A- 2 986 930
- US-A1- 2013 311 112

## Description

### FIELD

The present subject matter relates generally to a thrust measuring device for a propulsion system, and a method for using the same.

### BACKGROUND

An airplane or other vehicle may include a propulsion system having one or more gas turbine engines for generating an amount of thrust, or for generating power to be transferred to a thrust generating device. The gas turbine engine generally includes turbomachinery. The turbomachinery, in turn, generally includes a compressor section, a combustion section, a turbine section, and an exhaust section.

During operation of the gas turbine engine, air is provided to an inlet of the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gasses through the turbine section drives the turbine section and is then routed through the exhaust section, e.g., to atmosphere.

The gas turbine engine may further include a propeller assembly, with the turbomachinery utilized to rotate the propeller assembly. Rotation of the propeller assembly may generate an amount of forward thrust, which is typically transferred to the vehicle for moving the vehicle. It may be beneficial for a control system of the gas turbine engine or vehicle to receive relatively accurate information regarding an amount of forward thrust generated by the propeller assembly in order to more appropriately control certain aspects of the gas turbine engine.

Typically, an amount of forward thrust provided the vehicle by the gas turbine engine is determined based on one or more parameter values of the gas turbine engine. However, such a determination method may result in relatively inaccurate forward thrust information. Accordingly, a more accurate system and method for determining an amount of forward thrust generated by a gas turbine engine during operation would be useful.
GB 2 338 793 describes a system for determining the location or locations on an engine at which the most repeatable strain occurs. US 2013/311112 describes an apparatus and a method to determine the thrust of an engine. US 2 986 930 Adescribes an engine trunnion mounting and thrust indicating means.

### BRIEF DESCRIPTION

Aspects and advantages of the invention will be set forth in part in the following description, or may be obvious from the description, or may be learned through practice of the invention. The invention comprises the features defined in independent apparatus claim 1 and independent method claim 10. Preferred embodiments are defined in the appended dependent claims.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a top view of an aircraft according to various exemplary embodiments of the present disclosure.
FIG. 2 is a schematic, cross-sectional view of a propulsion assembly in accordance with an exemplary embodiment of the present disclosure.
FIG. 3 is a side, cutaway view of the exemplary propulsion assembly of FIG. 2 mounted within an aeronautical vehicle.
FIG. 4 is an axial view of a propulsion assembly and engine mount in accordance with an alternative location of sensors which is not covered by the present invention;
FIG. 5 is a schematic view of a surface acoustic wave sensor in accordance with an exemplary embodiment of the present disclosure.
FIG. 6 is a view of various vehicles which may include propulsion systems in accordance with an exemplary embodiment of the present disclosure.
FIG. 7 is a method for operating a propulsion system of a vehicle in accordance with an exemplary aspect of the present disclosure.
FIG. 8 is a method for operating a propulsion system of a vehicle in accordance with another exemplary aspect of the present disclosure.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components.

The terms "forward" and "aft" refer to relative positions within a gas turbine engine, with forward referring to a position closer to an engine inlet and aft referring to a position closer to an engine nozzle or exhaust.

The terms "upstream" and "downstream" refer to the relative direction with respect to fluid flow in a fluid pathway. For example, "upstream" refers to the direction from which the fluid flows, and "downstream" refers to the direction to which the fluid flows.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. Here and throughout the specification and claims, range limitations are combined and interchanged, such ranges are identified and include all the sub-ranges contained therein unless context or language indicates otherwise.

As used herein, the terms "processor" and "computer," and related terms, e.g., "processing device," "computing device," and "controller", are not limited to just those integrated circuits referred to in the art as a computer, but further broadly refers to one or more devices including one or more of a microcontroller, a microcomputer, a programmable, logic controller (PLC), and application specific integrated circuit, and other programmable circuits, and these terms are used interchangeably herein. In the embodiments described herein, the computer or controller may additionally include memory. The memory may include, but is not limited to, a computer-readable medium, such as a random access memory (RAM), a computer-readable non-volatile medium, such as a flash memory. Alternatively, a floppy disk, a compact disc - read only memory (CD-ROM), a magneto-optical disk (MOD), and/or a digital versatile disc (DVD) may also be used. Also, in the embodiments described herein, the computer or controller may include one or more input channels and/or one or more output channels. The input channels may be, but are not limited to, computer peripherals associated with an operator interface such as a mouse and a keyboard, or sensors, such as engine sensors associated with an engine, such as a gas turbine engine for determining operating parameters of the gas turbine engine. Furthermore, in the exemplary embodiment, the output channels may include, but are not be limited to, an operator interface monitor. Further, the memory may store software or other instructions, which when executed by the controller or processor allow the controller to perform certain operations or functions, such as the functions described in the methods 300 and 400, below. The term "software" may include any computer program stored in memory, or accessible by the memory, for execution by, e.g., the controller, processor, clients, and servers.

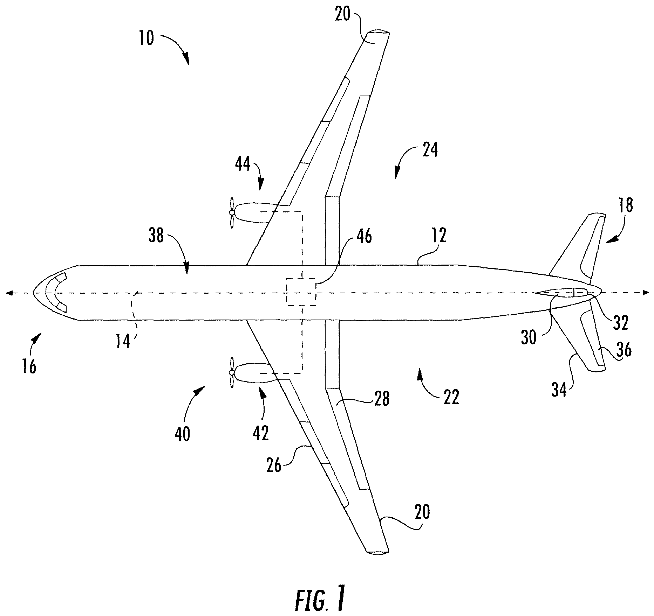

Referring now to the drawings, wherein identical numerals indicate the same elements throughout the figures, FIG. 1 provides a top view of an exemplary aircraft 10 as may incorporate various embodiments of the present invention. As shown in FIG. 1, the aircraft 10 defines a longitudinal centerline 14 that extends therethrough, a lateral direction L, a forward end 16, and an aft end 18.

Moreover, the aircraft 10 includes a fuselage 12, extending longitudinally from the forward end 16 of the aircraft 10 towards the aft end 18 of the aircraft 10, and a pair of wings 20. The first of such wings 20 extends laterally outwardly with respect to the longitudinal centerline 14 from a port side 22 of the fuselage 12 and the second of such wings 20 extends laterally outwardly with respect to the longitudinal centerline 14 from a starboard side 24 of the fuselage 12. Each of the wings 20 for the exemplary embodiment depicted includes one or more leading edge flaps 26 and one or more trailing edge flaps 28. The aircraft 10 further includes a vertical stabilizer 30 having a rudder flap 32 for yaw control, and a pair of horizontal stabilizers 34, each having an elevator flap 36 for pitch control. The fuselage 12 additionally includes an outer surface or skin 38. It should be appreciated however, that in other exemplary embodiments of the present disclosure, the aircraft 10 may additionally or alternatively include any other suitable configuration of stabilizer that may or may not extend directly along the vertical direction V or horizontal/ lateral direction L.

The exemplary aircraft 10 of FIG. 1 additionally includes a propulsion system 40, herein also referred to as "system 40". The exemplary system 40 includes one or more propulsion assemblies for generating a thrust for the aircraft 10. For the embodiment depicted, each of the propulsor assemblies includes a motor and a propulsor. For the embodiment depicted, each of the motors are configured as gas turbine engines; and the propulsors, are configured as propellers. Accordingly, each of the propulsor assemblies may be referred to as a turboprop engines. More specifically, for the embodiment depicted, the propulsion system 40 includes a first propulsor assembly 42 and a second propulsor assembly 44. The first and second propulsor assemblies 42, 44 are attached to and suspended beneath the wings 20 in an under-wing configuration. Additionally, as is depicted schematically, each of the first and second propulsor assemblies 42, 44 are operably connected to a controller 46 of the aircraft 10.

It should be appreciated, however, that the aircraft 10 and propulsion system 40 depicted in FIG. 1 is provided by way of example only and that in other exemplary embodiments of the present disclosure, any other suitable aircraft 10 may be provided having a propulsion system 40 configured in any other suitable manner. For example, it should be appreciated that in various other embodiments, the propulsion system may have any other suitable number of propulsor assemblies mounted to the aircraft 10 in any other suitable manner.

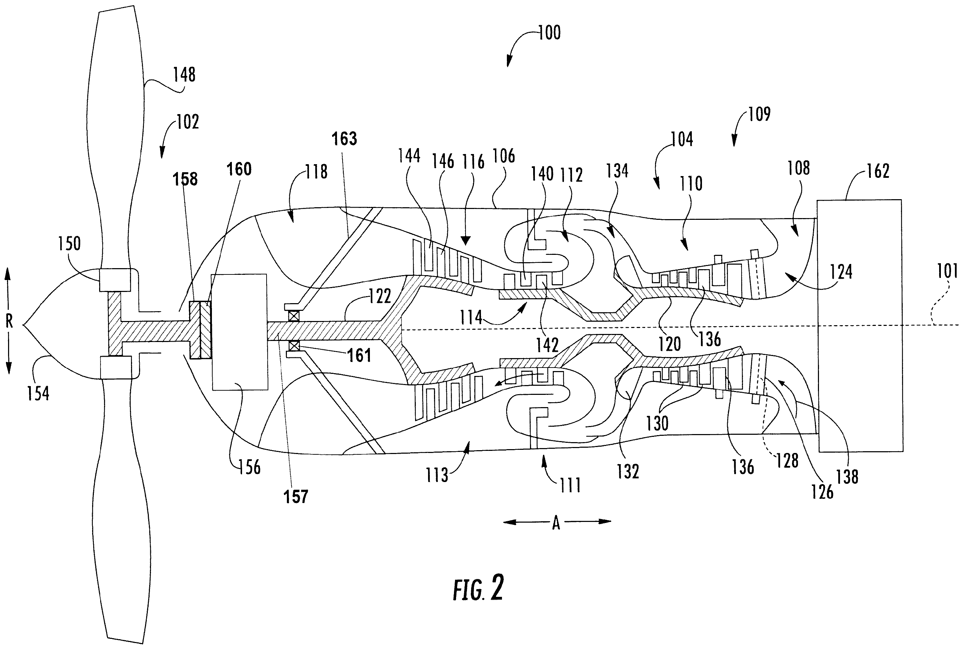

Referring now to FIG. 2, a schematic, cross-sectional view of a propulsor assembly in accordance with an exemplary embodiment of the present disclosure is provided. The propulsor assembly of FIG. 2 may be one of the first or second propulsor assemblies 42, 44 of the exemplary propulsion system 40 described above with reference to FIG. 1. More particularly, for the embodiment of FIG. 2, the propulsor assembly includes a propulsor for generating thrust and a motor operable with the propulsor. The propulsor is configured as a propeller (or a propeller assembly) and the motor is configured as a gas turbine engine. Accordingly, for the embodiment depicted, the propulsor of FIG. 2 is configured as a turboprop engine 100. It will be appreciated, however, that in other exemplary embodiments, the propulsor assembly may instead be configured in any other suitable manner. For example, in other exemplary embodiments, the turboprop engine 100 may instead be configured as a turboshaft engine, a turbofan engine, or any other suitable gas turbine engine assembly.

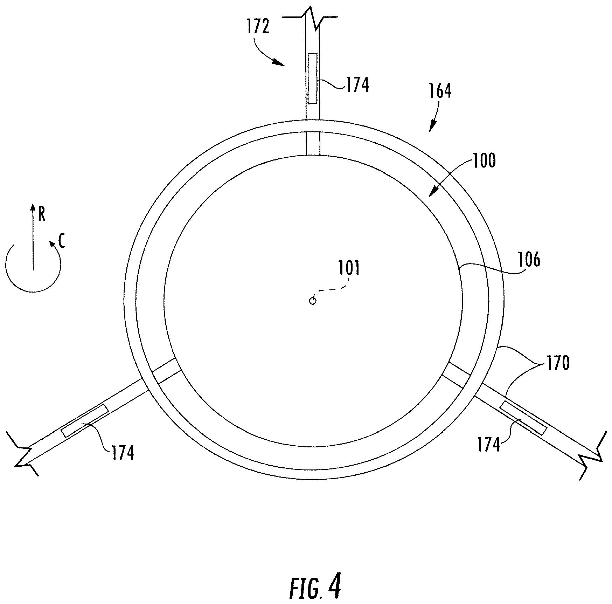

As shown in FIG. 2, the turboprop engine 100 defines an axial direction A (extending parallel to a longitudinal centerline 101 provided for reference), a radial direction R, and a circumferential direction (i.e., a direction extending about the axial direction A; see FIG. 4). As stated, the turboprop engine 100 includes a gas turbine engine 104 and a propeller assembly 102.

The exemplary gas turbine engine 104 depicted generally includes a substantially tubutar outer casing 106 that at least partially encloses an annular, radial inlet duct 108. The radial inlet duct 108 includes at least a portion extending generally along the radial direction R, and is further configured to turn a direction of an air flow therethrough, such that the resulting airflow is generally along the axial direction A. Additionally, the outer casing 106 encases, in serial flow relationship, a compressor section 109 including a single compressor 110; a combustion section 111 including a reverse flow combustor 112; a turbine section 113 including a high pressure (HP) turbine 114, and a low pressure (LP) turbine 116; and an exhaust section 118. Moreover, the turboprop engine 100 depicted is a dual-spool engine, including a first, high pressure (HP) shaft or spool 120 coupling the HP turbine 114 to the compressor 110, and a low pressure (LP) shaft or spool 122 drivingly connecting the LP turbine 116 to the propeller assembly 102.

The compressor section 109, combustion section 111, turbine section 113, and exhaust section 118 together define a core air flowpath 124 through the gas turbine engine 104. Notably, for the, embodiment depicted, the gas turbine engine 104 further includes a stage of inlet guide vanes 126 at a forward end of the core air flowpath 124. Specifically, the inlet guide vanes 126 are positioned at least partially within the radial inlet duct 108, the radial inlet duct 108 located upstream of the compressor section ,109. Further, the exemplary stage of inlet guide vanes 126 of FIG. 2 are configured as variable inlet guide vanes. The variable inlet guide vanes 126 are each rotatable about a pitch axis 128, allowing for the guide vanes 126 to direct an airflow through the radial inlet duct 108 into the compressor 110 of the compressor section 109 in a desired direction. It should be appreciated, however, , that in still other exemplary embodiments, the inlet guide vanes 126 may not be configured as variable inlet guide vanes, and instead may be fixed.

Furthermore, the compressor 110 of the exemplary compressor section 109 depicted includes at least four stages of compressor rotor blades. More specifically, for the embodiment depicted, the compressor 110 of the compressor section 109 includes four stages of radially oriented compressor rotor blades 130, and an additional stage of centrifugal compressor rotor blades 132. As is depicted, the gas turbine engine 104 further includes a transition duct 134 immediately downstream of the compressor 110, the transition duct 134 having at least a portion extending generally along the radial direction R to provide a compressed air flow from the compressor 110 to the reverse flow combustor 112. The stage of centrifugal compressor rotor blades 132 is configured to assist with turning the compressed air within the compressor section 109 radially outward into the transition duct 134. Notably, however, in other exemplary embodiments, the combustion section 111 may not include the reverse flow combustor 112. With such an exemplary embodiment, the compressor 110 also may not include the stage of centrifugal compressor rotor blades 132.

Additionally, between each stage of compressor rotor blades 130, 132, the compressor section 109 includes a stage of compressor stator vanes 136. Notably, for the embodiment depicted, each of the stages of compressor stator vanes 136 are configured as fixed compressor stator vanes.

It will be appreciated, that during operation of the turboprop engine 100, a volume of air 138 enters the turboprop engine 100 through the radial inlet duct 108, and flows across the variable inlet guide vanes 126 and into the compressor 110 of the compressor section 109. A pressure of the air is increased as it is routed through the compressor 110, and is then provided to the reverse flow combustor 112 of the combustion section 111, where the air is mixed with fuel and burned to provide combustion gases. The combustion gases are routed through the HP turbine 114 where a portion of thermal and/or kinetic energy from the combustion gases is extracted via sequential stages of HP turbine stator vanes 140 that are coupled to the outer casing 106 and HP turbine rotor blades 142 that are coupled to the HP shaft 120, thus causing the HP shaft 120 to rotate, thereby supporting operation of the compressor 110. The combustion gases are then routed through the LP turbine 116 where a second portion of thermal and kinetic energy is extracted from the combustion gases via sequential stages of LP turbine stator vanes 144 that are coupled to the outer casing 106 and LP turbine rotor blades 146 that are coupled to the LP shaft 122, thus causing the LP shaft 122 to rotate, thereby supporting operation of the propeller assembly 102. The, combustion gases are subsequently routed through the exhaust section 118 of the gas turbine engine 104.

Moreover, as briefly stated, the LP shaft 122 is coupled to the LP turbine 116, and is further mechanically coupled to the propeller assembly 102. The propeller assembly 102 generally includes a plurality of propeller blades 148 coupled at a root end to a hub 150. The hub 150 is, in turn, coupled to a propeller shaft 152, which is configured for rotating the plurality of propeller blades 148 and hub 150. A front spinner 154 is provided over the hub 150 to promote an airflow through the plurality of propeller blades 148 during operation. Additionally, the gas turbine engine 104 includes a gearbox 156. The LP shaft 122 is mechanically coupled to the propeller shaft 152 of the propeller assembly 102 through the gearbox 156, such that the LP shaft 122 may drive the propeller assembly 102 during operation. More specifically, the engine 100 further includes an engine shaft 157 extending from the LP turbine 116 within the turbine section 113 (and from the LP shaft 122), through the gearbox 156 to the propeller assembly 102.

Moreover, for the embodiment depicted, the propeller assembly 102 further includes a flange 158 for attaching the propeller assembly 102 to the gas turbine engine 104. More specifically, the gas turbine engine 104 similarly includes a flange 160, and the flange 158 of the propeller assembly 102 attaches to the flange 160 of the gas turbine engine 104 to couple the propeller assembly 102 to the gas turbine engine 104. As will be discussed below, the flange 160 is configured as part of the engine shaft 157 and is located on the gearbox 156, and the flange 158 is configured as part of the propeller shaft 152.

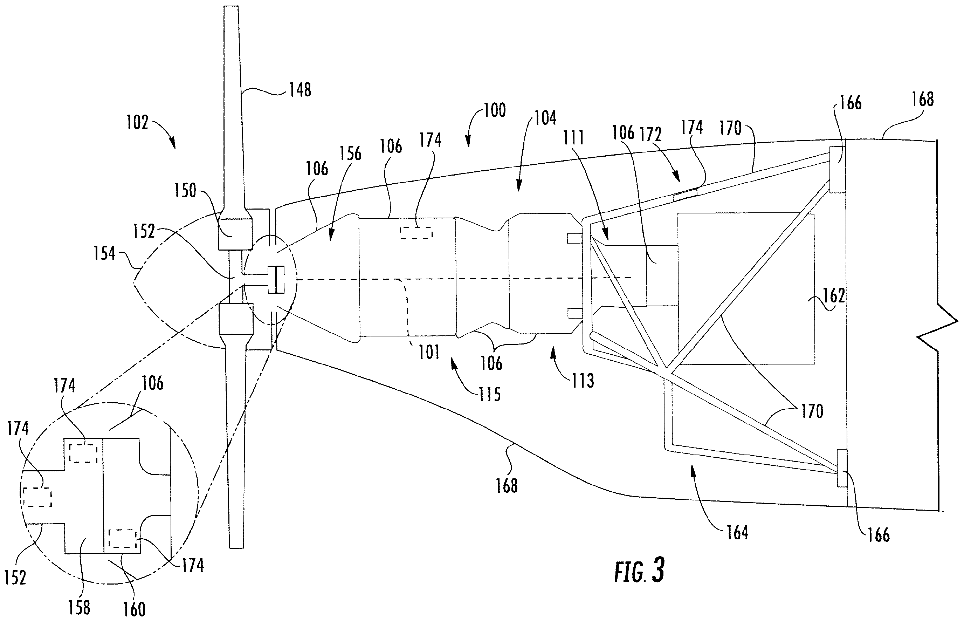

Referring now to FIG. 3, a cutaway view is provided of a propulsion system including a propulsor assembly mounted to an aircraft 10. For the embodiment of FIG. 3, the propulsor assembly is configured as a turboprop engine 100, and may in certain exemplary embodiments be configured in substantially the same manner as the exemplary turboprop engine 100 described above with reference to FIG. 2. Accordingly, the same or similar numbers may refer to the same or similar parts. It should be appreciated, however, that in other exemplary embodiments, any other suitable propulsor assembly may be provided. For example, in other exemplary embodiments, the propulsor assembly may include an electric motor, a reciprocating engine, or other power source instead of a gas turbine engine to rotate a fan, propeller, or other such device to generate thrust.

For example, the exemplary turboprop engine 100 of FIG. 3 generally includes a propeller assembly 102 (propulsor) coupled to a gas turbine engine 104 (motor). The gas turbine engine 104 generally includes an inlet 108, a compressor section 109, a combustion section 111, a turbine section 113, and a gearbox 156. Although not previously discussed, as is depicted the turboprop engine 100 further includes a plurality of accessory systems 162, one or more of which may be coupled to or driven by the gas turbine engine 104.

Additionally, each of the compressor section 109, combustion section 111, turbine section 113, and gearbox 156 are surrounded by and enclosed at least partially within an outer casing 106. Gas turbine frames include bearing systems which support the rotating shafts of the gas turbine.. These frames are connected and supported by the gas turbine casing. For the embodiment depicted, a single bearing 161 and frame 163 are depicted for exemplary purposes supporting the shaft 157. It should be appreciated, however, that in other exemplary embodiments, any other suitable configuration (e.g., number, position, orientation) of engine frames and bearings may be provided. The engine shaft 157 includes the attachment flange 160 to which the propeller assembly 102 is connected. The gas turbine frames (including frame 163) and outer casing 106, as well as the attachment flange 160 of the shaft 157, are structural components of the gas turbine engine 104, supporting a thrust force generated by the propeller assembly 102 during operation of the turboprop engine 100. Additionally, for the embodiment depicted, the shafts (including shaft 157), frames (including frame 163) and outer casing 106 are segmented at each of the various sections of the gas turbine engine 104. However, in other embodiments, the outer casing 106 and one or more of the shafts may instead extend continuously between two or more sections of the gas turbine engine 104, or alternatively may be segmented into additional sections.

As is also depicted in FIG. 3, the propulsion system further includes a motor mount 164 for mounting the gas turbine engine 104 in or to the aircraft 10. For the embodiment depicted, the motor mount 164 is attached to a portion of the gas turbine frame and casing 106 surrounding the combustion section 111 of the gas turbine engine 104, and mounts the gas turbine engine 104 to a plurality of anchor points 166 within an outer nacelle 168 at least partially surrounding the gas turbine engine 104. More specifically, for the embodiment depicted, the motor mount 164 includes a plurality of structural bars 170 attached to, and extending between, the outer casing 106 and frame (e.g., frame 163) of the gas turbine engine 104 and the plurality of anchor points 166 of the aircraft 10. It should be appreciated, however, that in other exemplary embodiments, the motor mount 164 may additionally or alternatively be connected to one or more other stationary sections of the gas turbine engine 104.

As will be appreciated, an entirety of a thrust force generated by the propeller assembly 102 of the turboprop engine 100 during operation of the turboprop engine 100 travels through the engine shaft 157, then one or more of the frames (e.g., frame 163) which house and support the bearings (e.g., bearing 161) supporting the rotating shafts, and then the casing 106 and the motor mount 164 to the aircraft 10. More specifically, the turboprop engine 100 defines a thrust force path (or thrust path) from the propulsor to the vehicle, which for the embodiment depicted is from the propeller blades 148 of the propeller assembly 102 to the aircraft 10. The thrust force path, for the embodiment depicted, travels from the plurality of propeller blades 148 of the propeller assembly 102, to the propeller shaft 152, to a flange 158 of the propeller assembly 102, to the flange 160 of the gas turbine engine 104 (or rather, to the flange 160 of the engine shaft 157), then through one or more bearings and frame supports (e.g., bearing 161 and frame 163), then through the outer casing 106 surrounding the various sections of the gas turbine engine 104, through the motor mount 164, and to the aircraft 10 at the anchor points 166.

For the exemplary propulsion system depicted, a thrust measuring device 172 is further provided for directly measuring an amount of thrust provided to the aircraft 10 by the turboprop engine 100. More specifically, according to the invention the thrust measuring device 172 includes a strain sensor 174 mounted to a structural component of the at least one of the propeller assembly 102 or the gas turbine engine 104 for directly measuring a strain on the structural component caused by the thrust generated by the propeller assembly 102 during operation of the propulsion system. Notably, as used herein, the term "structural component" refers to a component through which a thrust force path of a thrust force generated by the propeller assembly 102 travels to the aircraft 10 during operation of the turboprop engine 100. For example, the structural component may be the flange 160 of the gas turbine engine 104, a rotating shaft (e.g., the propeller shaft 152 or engine shaft 157), or an engine bearing (such as engine bearing 161). Alternative exemplary locations in non-rotatable components such as an engine frame (such as engine frame 163), a portion of the outer casing 106 of the gas turbine engine 104 (i.e., between the flange 160 and the attachment points of the motor mount 164 of the outer casing 106), or one or more of the structural bars 170 of the motor mount 164 do not fall in the scope of the invention. Particularly for the example depicted, the strain sensor is mounted to one of the structural bars 170 of the motor mount 164. However, as is depicted schematically, in other embodiments the strain sensor 174 may additionally or alternatively be mounted to the flange 160 of the engine shaft 157 of the gas turbine engine 104, to the flange 158 of the propeller assembly 102, to the propeller shaft 152 of the propeller assembly 102, or to a gas turbine shaft.

By mounting the strain sensor 174 to a structural component, the strain sensor 174 may determine an effective forward thrust generated by the propeller assembly 102 and provided to the aircraft 10 during operation of the propulsor system by directly measuring a strain on the component caused by the thrust generated by the propeller assembly 102.

Additionally, it should be , appreciated that in certain exemplary embodiments, the thrust measuring device 172 may include a single strain sensor 174 (as is depicted in FIG. 3), or alternatively may include a plurality of strain sensors 174 mounted to various components of the turboprop engine 100 (as is depicted schematically in FIG. 3). However, referring now briefly to FIG. 4, providing a schematic, axial view of a motor mount 164 and a gas turbine engine 104 in accordance with an alternative exemplary variant of the present disclosure not falling in the scope of the invention, it should be appreciated that the thrust measuring device 172 may include a plurality of strain sensors 174 spaced along a circumferential direction C of the gas turbine engine 104 in order to obtain an axisymmetric view of the thrust path. More specifically, as is shown, for the exemplary embodiment depicted, the thrust measuring device 172 includes a plurality of strain sensors 174 attached at various circumferential locations to the structural bars 170 of the motor mount 164 to obtain an axisymmetric view of the thrust path during operation of the turboprop engine 100.

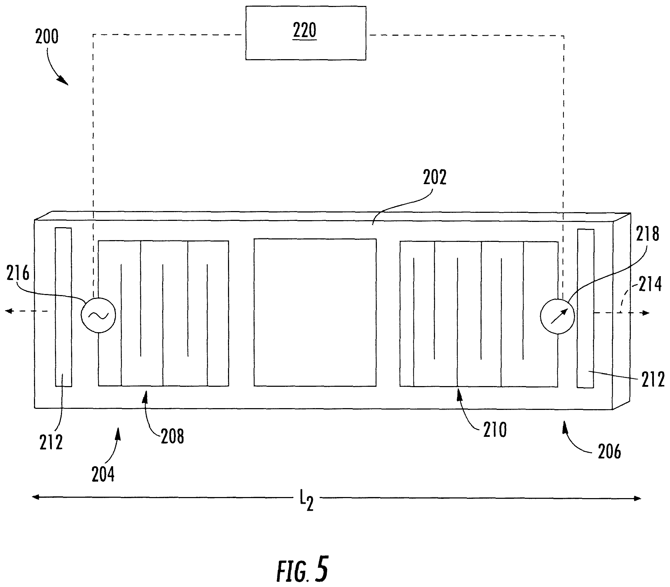

Moreover, it should be appreciated, that the exemplary strain sensors 174 depicted in FIG. 3 are each configured as a surface acoustic wave ("SAW") sensors 200. Referring now also to FIG. 5, a schematic view is provided of a SAW sensor 200 in accordance with an exemplary embodiment of the present disclosure. The exemplary SAW sensor 200 depicted generally includes a piezoelectric substrate 202 extending along a longitudinal direction L2 between a first end 204 and a second end 206. Additionally, the exemplary SAW sensor 200 includes first, input interdigitated transducer 208 at the first end 204 of the piezoelectric substrate 202 and a second, output interdigitated transducer 210 at the second end 206 of the piezoelectric substrate 202. Acoustic absorbers 212 are placed outside the input interdigitated transducer 208 and the output interdigitated transducer 210. As is depicted schematically, the exemplary SAW sensor 200 further defines a centerline 214 extending along the longitudinal direction L2.

Further, the SAW sensor 200 includes a signal input device 216 electrically connected to the input interdigitated transducer 208, a signal output device 218 electrically connected to the output interdigitated transducer 210, and a controller 220 operably connected to both the signal input device 216 and the signal output device 218. In certain exemplary embodiments, the signal input device 216 may include a radio frequency ("RF") antenna configured to receive an RF signal, and the signal output device 218 may similarly include an RF antenna configured to transmit an RF signal. During operation, the signal input device 216 may receive an input signal, such as the RF signal, and provide such input signal to the input interdigitated transducer 208. The input interdigitated transducer 208 may translate such input signal to an acoustic wave signal by applying an electrical charge to the piezoelectric substrate 202. The acoustic wave signal may travel along the piezoelectric substrate 202 in the longitudinal direction L2 to the output interdigitated transducer 210, which may translate the acoustic wave back to an output signal, such as an output RF signal, provided to the signal output device 218.

As stated, the signal input device 216 and the signal output device 218 are each operably connected to a controller 220. The controller 220 may provide the input signal to the signal input device 216 and further may receive the output signal from the signal output device 218. Moreover, the SAW sensor 200 is attached to a component of the propulsion system, such as to a structural component of the propulsion system, in order to determine a strain on such component resulting from a thrust generated by the propeller assembly 102. Notably, it will be appreciated that the SAW sensor 200 may be attached to one or more components without requiring any structural modification of such components. For example, in the embodiment depicted in FIG. 3, the SAW sensor 200 is attached using an adhesive fastener. For example, the SAW sensor 200 may be attached using a glue, an epoxy, or any other suitable adhesive fastener.

Referring still to FIG. 5, the controller 220 may more specifically receive the output signal from the signal output device 218, and process such output signal to determine an amount of strain applied to the component to which the SAW sensor 200 is attached. More particularly, any elongation or contraction of the piezoelectric substrate 202 (as a result of an elongation or contraction of the underlying component, as a result of a strain on the underlying component) along, e.g., the longitudinal direction L2 of the SAW sensor 200, will affect the acoustic wave provided to the output interdigitated transducer 210, in turn affecting an output signal, such as an output RF signal, provided from the signal output device 218 to the controller 220. The controller 220 may process the output signal received from the signal output device 218 to, in turn, determine an amount of strain on the underlying component to which the SAW sensor 200 is attached. It should be appreciated, however, that in other exemplary embodiments, the SAW sensor 200 may have any other suitable configuration and, further, may operate in any other suitable manner.

Referring still to FIG. 5, the amount of strain on the underlying component may then be used to determine an amount of thrust provided to the aircraft 10 through the propeller assembly 102 of the turboprop engine 100. As will be appreciated, utilization of a SAW sensor 200 attached to the component may provide an amount of strain on the component with a relatively high degree of accuracy, allowing for an amount of thrust provided to the aircraft 10 to be determined also with a relatively high degree of accuracy.

Moreover, referring briefly back to FIG. 3, in order to increase an effectiveness of the SAW sensor 200 in determining a strain on a particular component indicative of a thrust being generated by the propeller assembly 102, the exemplary SAW sensor 200 depicted in FIG. 3 is oriented generally along the thrust path of the propulsion system. For the embodiment depicted in FIG. 3, given the axial configuration of the propulsion system therein, the exemplary SAW sensor 200 depicted in FIG. 3 is oriented generally along an axial direction A of the gas turbine engine 104. Notably, as used herein, "oriented generally along the axial direction A" with reference to the SAW sensor 200 refers to the centerline 214 of the SAW sensor 200 extending substantially within a reference plane, the reference plane defined by the radial direction R of the propulsor (such as the gas turbine engine 104 in the embodiments above) and the longitudinal centerline 101 of the propulsor (such as the gas turbine engine 104 in the embodiments above). However, in other embodiments, the SAW sensor 200 may instead be oriented in any other suitable manner along the thrust force path of the propulsion system.

Notably, referring again briefly to FIG. 1, it will be appreciated, that the propulsion assembly of the propulsion system discussed above with reference to FIGS. 2, 3, and 5 may be configured similar to the propulsion system 40 described above with reference to FIG. 1. Accordingly, the propulsion assembly may be configured as a first propulsion assembly 42. The propulsion system 40 may further include a second propulsion assembly 44, the second propulsion assembly 44 similarly including a propulsor, a motor, and a motor mount. More particularly, the second propulsion assembly 44 may be configured in substantially the same manner as the first propulsion assembly 42. Further, the thrust measuring device 172 may further include a second strain sensor, such as a second SAW sensor, mounted to a structural component of at least one of the propulsor, the motor, or the motor mount with the second propulsor assembly. As with the SAW sensor 200 operable with the first propulsion assembly 42, the SAW sensor operable with the second propulsion assembly 44 may be configured for directly measuring a strain on the structural component of the second propulsion assembly 44 caused by a thrust generated by the propulsor of the second propulsion assembly 44 during operation of the propulsion system 40. Accordingly, with such an exemplary embodiment, the thrust measuring device 172 may be configured for determining with a relatively high degree of accuracy an actual amount of thrust provided to an aircraft 10 through a plurality of propulsion assemblies of a propulsion system 40.

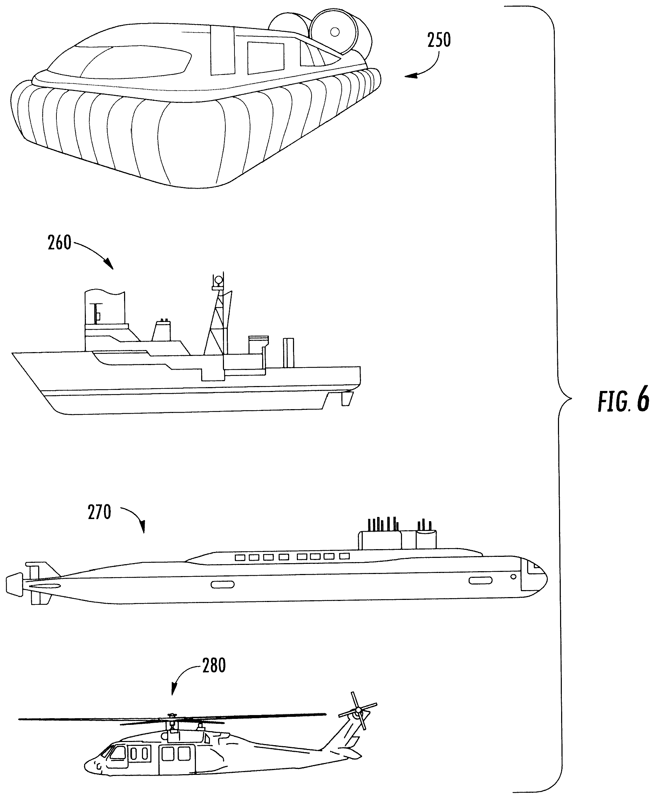

Moreover, referring now briefly to FIG. 6, it should be appreciated that in other exemplary embodiments, aspects of the present disclosure may be incorporated into propulsion systems utilized with other vehicles (i.e., with vehicles other than a fixed wing aircraft, such as rotary wing aircraft 10). For example, in other exemplary embodiments, the propulsion system 40 may be utilized with land-based vehicles including a propulsion system, nautical vehicles including a propulsion system, or other aeronautical vehicles including a propulsion system. For example, as is depicted in FIG. 6, aspects of the present disclosure may be utilized with a hovercraft 250, a ship 260, a submarine 270, a helicopter 280, and/or an aircraft having vertical takeoff and landing capabilities (not shown).

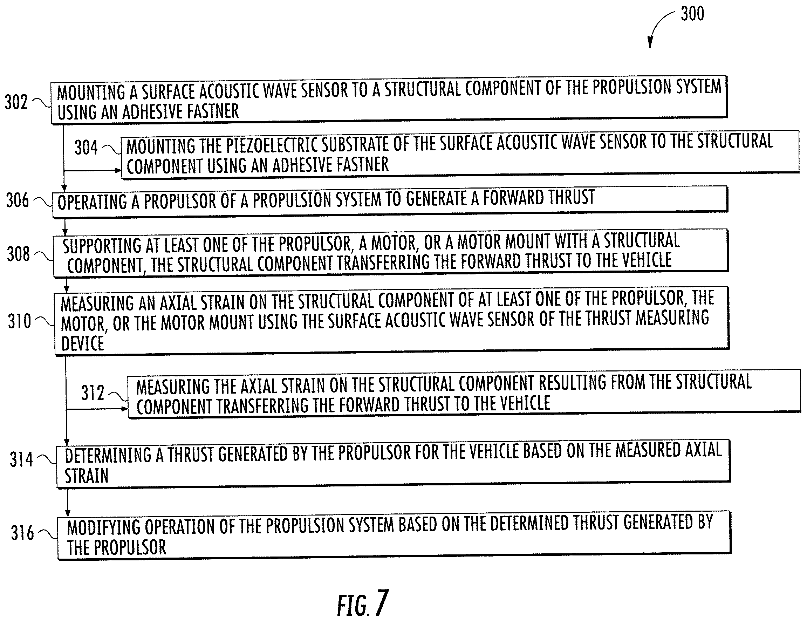

Referring now to FIG. 7 a flow diagram of a method 300 for operating a propulsion system of a vehicle in accordance with an exemplary aspect of the present disclosure is provided. In certain exemplary aspects, the method 300 of FIG. 7 may be incorporated into one or more of the exemplary vehicles, propulsion systems, propulsion assembles, and/or thrust measuring devices described above with reference to FIGS. 1 through 6.

For the exemplary aspect of FIG. 7, the exemplary method 300 includes at (302) mounting a surface acoustic wave sensor to a structural component of the propulsion system using an adhesive fastener. For example, surface acoustic wave sensor may include a piezoelectric substrate. With such an exemplary aspect, mounting the surface acoustic wave sensor to the structural component at (302) includes at (304) mounting the piezoelectric substrate of the surface acoustic wave sensor to the structural component using an adhesive fastener. However, in other exemplary aspects, any other suitable strain sensor may be utilized.

Additionally, the exemplary method 300 includes at (306) operating a propulsor of a propulsion system to generate a forward thrust, and at (308) supporting at least one of the propulsor, a motor, or a motor mount with a structural component, the structural component transferring the forward thrust to the vehicle. For example, in certain exemplary aspects, the propulsor may be a propeller assembly and the motor may be a gas turbine engine. Accordingly, with such an exemplary aspect operating the propulsor of the propulsion system at (306) may include operating the propeller assembly to generate a forward thrust, and supporting at least one of the propulsor, the motor, or the motor mount with a structural component at (308) may include supporting at least one of the propeller assembly, the gas turbine engine, or the motor mount with a structural component.

Referring still to FIG. 7, the exemplary method 300 includes at (310) measuring an axial strain on the structural component of at least one of the propulsor, the motor, or the motor mount using the surface acoustic wave sensor of the thrust measuring device. More specifically, for the exemplary method 300 of FIG. 7, measuring the axial strain on the structural component at (310) further includes at (312) measuring the axial strain on the structural component resulting from the structural component transferring the forward thrust to the vehicle. As used herein, the term, "axial strain" refers to a strain acting at least partially in a direction parallel to an axial direction of the motor, such as the axial direction A of the gas turbine engine 104 of FIG. 2.

Additionally, the exemplary method 300 includes at (314) determining a thrust generated by the propulsor for the vehicle based on the axial strain measured at (310), and at (316) modifying operation of the propulsion system based on the thrust generated by the propulsor determined at (314). Accordingly, the exemplary method 300 may generally include controlling operation of the propulsion system based on the determined amount of thrust.

More specifically, modifying operation of the propulsion system at (316) may include controlling a power output of (or power generated by) the motor of the propulsion system independent of a thrust force generated by the propulsor of the propulsion system. For example, as the method 300 may measure a thrust generated directly (as opposed to measuring indirectly using, e.g., an engine parameter), modifying operation of the propulsion system at (316) may include changing (i.e., increasing or decreasing) an amount of thrust generated by the propulsor independent of an amount of power generated by the motor. For example, changing the amount of thrust generated by the propulsor independent of the amount of power generated by the motor may include changing the amount of thrust generated by the propulsor in response to the determined amount of thrust generated at (314), while maintaining a substantially constant power generation by the motor. This may include modifying one or more variable geometry components of the gas turbine engine (such as a pitch angle of the blades of the propulsor). This additional degree of control may be utilized to optimize fuel burn/efficiency, vehicle power or speed, maneuverability and handling, noise/ acoustic signature, thermal signature in the case of a radar evading vehicle, exhaust emissions or any other motor, propulsor or aircraft characteristic which may be adjusted by the control system with this added degree of freedom/adjustability.

Moreover, in certain exemplary aspects of the present disclosure, the method 300 may additionally or alternatively include, or rather determining the thrust generated by the propulsor for the vehicle based on the axial strain at (314) may additionally include, determining a stall condition or a deterioration of the propulsor using the determined thrust at (314). Detecting a stall condition may include determining that the thrust determined at (314) is below a predetermined threshold for a given propulsor assembly parameter (e.g., a gas turbine engine temperature, rotational speed, propulsor blade pitch angle, etc.). The method may further include modifying operation of the gas turbine engine in response to determining the stall condition. For example, the method 300 may include modifying one or more variable geometry components, such as a pitch angle of the blades of the propulsor, in response to determining the stall condition in order to pull the propulsor assembly out of the stall condition. It should be appreciated, that the stall condition may be determined in this manner regardless of normal operation of the gas turbine engine (i.e., gas turbine engine operating parameters may not indicate a propulsor/propeller, stall condition).

Additionally, or alternatively, in still other exemplary aspects of the present disclosure, the method 300 may further include, or rather determining the thrust generated by the propulsor for the vehicle based on the axial strain at (314) may further include, controlling the propulsion system/assembly to minimize a thrust generated by the propulsion system/assembly or to produce a desired amount of reverse thrust. For example, controlling the propulsion system/assembly to minimize the thrust generated may include changing a pitch angle of the blades of the propulsor to minimize thrust (i.e., to move the blades to a stall condition) with or without modifying operation of the gas turbine engine. Additionally, controlling the propulsion system/ assembly to produce a desired amount of reverse thrust may include changing a pitch angle of the blades of the propulsor to produce the desired amount of reverse thrust with or without modifying operation of the gas turbine engine

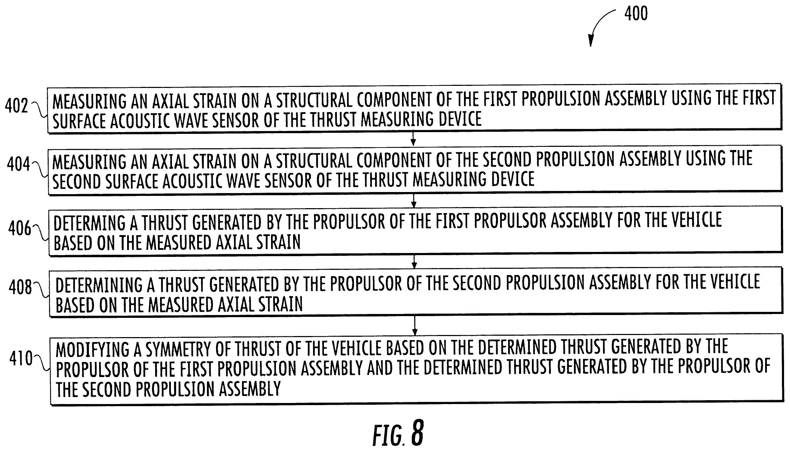

Referring now to FIG. 8, a method 400 for operating a propulsion system in accordance with another exemplary aspect of the present disclosure is provided. For the exemplary aspect of FIG. 8, the propulsion system generally includes a first propulsion assembly having a propulsor, a motor, and a motor mount, as well as a second propulsion assembly similarly having a propulsor, a motor, and a motor mount. Additionally, the propulsion system includes a thrust measuring device having a first surface acoustic wave sensor mounted to a structural component of the first propulsion assembly and a second surface acoustic wave sensor mounted to a structural component of the second propulsion assembly.

The exemplary method 400 generally includes at (402) measuring an axial strain on a structural component of the first propulsion assembly using the first surface acoustic wave sensor of the thrust measuring device, and at (404) measuring an axial strain on a structural component of the second propulsion assembly using the second surface acoustic wave sensor of the thrust measuring device. Moreover, the exemplary method 400 includes at (406) determining a thrust generated by the propulsor of the first propulsor assembly for the vehicle based on the measured axial strain at (402), and at (408) determining a thrust generated by the propulsor of the second propulsion assembly for the vehicle based on the measured axial strain at (404).

Having determined the actual thrust generated for the vehicle by the first propulsion assembly at (406) and the actual thrust generated for the vehicle by the second propulsion assembly at (408), the method 400 further includes at (410) modifying a symmetry of thrust of the vehicle based on the determined thrust generated by the propulsor of the first propulsion assembly and the determined thrust generated by the propulsor of the second propulsion assembly.

For example, modifying the symmetry of thrust at (410) may include controlling the first and second propulsion assemblies to provide an increased symmetry of thrust for the vehicle. When the vehicle is an aircraft, providing the increased symmetry of thrust may allow for a reduction in size of certain components, such as a vertical stabilizer, which may allow for a reduced drag on the aircraft in a lighter weight of the aircraft. Additionally, or alternatively, in certain exemplary aspects, modifying the symmetry of thrust at (410) may include providing further asymmetric thrust. The asymmetric thrust may assist with, e.g., takeoffs and landings when a side wind or other environmental conditions exist.

Moreover, in still other exemplary aspects, modifying the symmetry of thrust at (410) may allow for precise thrust vectoring. For example when the vehicle is an aircraft capable of vertical takeoffs and landings, precise thrust vectoring may be desirable for certain control purposes. More specifically, modifying the symmetry of thrust at (410) may include increasing and/or decreasing a thrust generated by the propulsor (by, e.g., modifying a variable geometry component of the propulsion assembly, such as a pitch angle of one or more blades of the propulsor) and an orientation of the propulsion assembly to control a thrust vector generated by the propulsion assembly. Modifying the symmetry of thrust at (410) may further include similarly controlling a plurality of propulsion assemblies of a propulsion system to control each of the respective thrust vectors of the plurality of propulsion assemblies. Notably, changing the orientation of a propulsion assembly may including rotating the propulsion assembly about an axis relative to a body of the vehicle, such as relative to a fuselage of an aircraft. With such an embodiment, rotating the propulsion assembly may include rotating the propulsion assembly independently or alternatively rotating a section of, or an entirety of, a wing to which it is mounted.

Further, still, it should be appreciated, that the method 400 may include determining an amount of thrust generated by more than two propulsion assemblies. For example, the method 400 may include determining, with a relatively high degree of precision, an amount of thrust generated by three or more propulsion assemblies, four or more propulsion assemblies, six or more propulsion assemblies, etc. With such an exemplary aspect, modifying the symmetry of thrust at (410) may additionally or alternatively include tuning an exact desired mode of operation/ amount of thrust generated/ vector of thrust generated from each propulsion assembly. The control of each of the propulsion assemblies may include one or more of the exemplary control aspects described above with reference to method 300 or method 400. Accordingly, the control of each of the propulsion assemblies may include modifying one or more variable geometry components (e.g., pitch angle of the blades of the respective propulsors) to tune an amount of thrust generated independent of an amount of power being generated by the motor.

This written description uses examples to disclose the invention, including the best mode, and also to enable any person skilled in the art to practice the invention, including making and using any devices or systems and performing any incorporated methods. The patentable scope of the invention is defined by the claims.

| [Reference Character | Component |
|---|---|
| 10 | Aircraft |
| 12 | Fuselage |
| 14 | Longitudinal centerline |
| 15 | Mean line |
| 16 | Forward end |
| 18 | Aft end |
| 20 | Wings |
| 22 | Portside |
| 24 | Starboard side |
| 26 | Leading edge flap |
| 28 | Trail edge flap |
| 30 | Vertical stabilizer |
| 32 | Rudder flap |
| 34 | Horizontal stabilizer |
| 36 | Elevator flap |
| 38 | Outer surface of fuselage |
| 40 | Propulsion system |
| 42 | 1 ^{st} propulsor assembly |
| 44 | 2^{nd} propulsor assembly |
| 46 | Controller |
| | |
| 100 | Turboprop engine |
| 102 | Propeller assembly |
| 104 | Gas turbine engine |
| 106 | Outer Casing |
| 108 | Inlet |
| 110 | High Pressure Compressor |
| 112 | Combustor |
| 114 | High Pressure Turbine |
| 116 | Low Pressure Turbine |
| 118 | Exhaust Section |
| 120 | High Pressure Shaft/Spool |
| 122 | Low Pressure Shaft/Spool |
| 124 | Core air flowpath |
| 126 | Inlet guide Vane |
| 128 | Pitch axis |
| 130 | Radial compressor rotor blades |
| 132 | Centrifugal compressor rotor blades |
| 134 | Transition duct |
| 136 | compressor stator vanes |
| 138 | Air flow |
| 140 | HP turbine stator vanes |
| 142 | HP turbine rotor blades |
| 144 | LP turbine stator vanes |
| 146 | LP turbine rotor blades |
| 148 | Propeller blades |
| 150 | Disk |
| 152 | Propeller shaft |
| 154 | Spinner |
| 156 | Gearbox |
| 158 | Propeller flange |
| 160 | Gas turbine engine flange |
| 162 | Accessory systems |
| 164 | Motor mount |
| 166 | Anchor points |
| 168 | Aircraft liner |
| 170 | Structural bars |
| 172 | Thrust measuring device |
| 174 | Strain sensor |
| 200 | Saw sensor |
| 202 | piezoelectric substrate |
| 204 | 1^{st} end |
| 206 | 2^{nd} end |
| 208 | input interdigitated transducer |
| 210 | output interdigitated transducer |
| 212 | Acoustic absorbers |
| 214 | Centerline |
| 216 | signal input device |
| 218 | signal output device |
| 220 | controller |

## Claims

1. A propulsion system (40) for a vehicle comprising:
a propulsor for generating a thrust for the vehicle;
a motor operable with the propulsor for driving the propulsor;
a motor mount (164) for mounting the motor in or to the vehicle; and
a thrust measuring device (172) comprising a strain sensor (174) mounted to a structural component of at least one of the propulsor or the motor rotatable with the propulsor during operation of the propulsion system, or a thrust bearing of the motor or propulsor, for directly measuring a strain caused by the thrust generated by the propulsor during operation of the propulsion system (40), wherein the strain sensor (174) is a surface acoustic wave sensor (200), wherein the propulsion system (40) defines a thrust path from the propulsor to the vehicle, and wherein the surface acoustic wave sensor (200) is oriented generally along a direction of the thrust path.

2. The propulsion system (40) of claim 1, wherein the surface acoustic wave sensor (200) of the thrust measuring device (172) comprises a piezoelectric substrate (202), an input interdigitated transducer (208) at a first end (204) of the piezoelectric substrate (202), and an output interdigitated transducer (210) at a second end (206) of the piezoelectric substrate (202).

3. The propulsion system (40) of claim 2, wherein the piezoelectric substrate (202) of the surface acoustic wave sensor (200) is attached to the structural component using an adhesive fastener.

4. The propulsion system (40) of claim 1, wherein the vehicle is an aeronautical vehicle, wherein the motor is a gas turbine engine (104), and wherein the propulsor is a propeller assembly (102).

5. The propulsion system (40) of claim 4, wherein the gas turbine engine (104) comprises a flange (160) and a shaft, wherein the propeller assembly (102) is attached to the flange (160) of the gas turbine engine (104), and wherein the strain sensor (174) of the thrust measuring device (172) is mounted to at least one of the flange (160) of the gas turbine engine (104) or the shaft of the gas turbine engine (104).

6. The propulsion system (40) of claim 1, wherein the motor comprises a structural frame, a shaft, and a thrust bearing operable with the shaft, wherein the strain sensor of the thrust measuring device is mounted to at least one of the shaft, or the thrust bearing.

7. The propulsion system (40) of claim 1, wherein the thrust measuring device (172) comprises a plurality of strain sensors (174).

8. The propulsion system of claim 1, wherein the strain sensor (174) of the thrust measuring device (172) is configured to determine an effective forward thrust generated by the propulsor during operation of the propulsion system (40) by directly measuring a strain on the structural component caused by the thrust generated by the propulsor.

9. The propulsion system (40) of claim 1, wherein the propulsor, the motor, and the motor mount (164) are each configured as part of a first propulsion assembly (42), wherein the propulsion system further comprises:
a second propulsion assembly (44) comprising a propulsor, a motor, and a motor mount (164);
wherein the strain sensor (174) is a first strain sensor, wherein the thrust measuring device (172) further comprises a second strain sensor mounted to a structural component of at least one of the propulsor or the motor of the second propulsion assembly (44) for directly measuring a strain on the structural component of the second propulsion assembly (44) caused by a thrust generated by the propulsor of the second propulsion assembly (44) during operation of the propulsion system (40).

10. A method for operating a propulsion system of a vehicle, the propulsion system comprising a propulsor, a motor operable with the propulsor and defining an axial direction, and a motor mount for mounting the motor in or to the vehicle, the method comprising:
mounting a strain sensor (174) to a structural component of the propulsion system, wherein said strain sensor (174) is a surface acoustic wave sensor (200) oriented along a direction of a thrust path defined from the propulsor to the vehicle of the propulsion system (40),
measuring an axial strain on either said structural component of at least one of the propulsor or the motor that is rotatable with the propulsor during operation of the propulsion system, or a thrust bearing of the motor or propulsor, using said strain sensor (174) of the thrust measuring device; and
determining a thrust generated by the propulsor for the vehicle based on the measured strain.

11. The method of claim 10, further comprising:
operating the propulsor to generate a forward thrust;
supporting at least one of the propulsor or the motor with the structural component to transfer the forward thrust to the vehicle; and
wherein measuring the axial strain on the structural component comprises measuring the axial strain on the structural component resulting from the structural component transferring the forward thrust to the vehicle.

12. The method of claim 11, wherein the surface acoustic wave sensor of the thrust measuring device comprises a piezoelectric substrate, and wherein the method further comprises:
mounting the piezoelectric substrate of the surface acoustic wave sensor to the structural component using an adhesive fastener.

13. The method of claim 12, wherein measuring the axial strain on the structural component comprises measuring the axial strain on the structural component of the first propulsion assembly, wherein determining the thrust generated by the propulsor for the vehicle comprises determining the thrust generated by the propulsor of the first propulsion assembly for the vehicle, and wherein the method further comprises:
measuring an axial strain on a structural component of at least one of the propulsor or the motor of the second propulsion assembly using the second surface acoustic wave sensor of the thrust measuring device; and
determining a thrust generated by the propulsor of the second propulsion assembly for the vehicle based on the measured axial strain.

14. The method of claim 13, further comprising:
modifying a symmetry of thrust of the vehicle based on the determined thrust generated by the propulsor of the first propulsion assembly and the determined thrust generated by the propulsor of the second propulsion assembly.

## Patentansprüche

1. Antriebssystem (40) für ein Fahrzeug, umfassend:
einen Propulsor zum Erzeugen eines Schubs für das Fahrzeug;
ein Triebwerk, das mit dem Propulsor betriebsfähig ist, zum Antreiben des Propulsors;
eine Triebwerklagerung (164) zum Montieren des Triebwerks in oder an dem Fahrzeug; und
eine Schubmessvorrichtung (172), die einen Dehnungssensor (174) umfasst, der an einem Bauteil von mindestens einem von dem Propulsor oder dem Triebwerk, das mit dem Propulsor während des Betriebs des Antriebssystems drehbar ist, oder einem Schublager des Triebwerks oder Propulsors montiert ist, zum direkten Messen einer Dehnung, die von dem durch den Propulsor während des Betriebs des Antriebssystems (40) erzeugten Schub verursacht wird, wobei der
Dehnungssensor (174) ein akustischer Oberflächenwellensensor (200) ist, wobei das Antriebssystem (40) einen Schubweg von dem Propulsor zu dem Fahrzeug definiert und wobei der akustische Oberflächenwellensensor (200) allgemein entlang einer Richtung des Schubwegs ausgerichtet ist.

2. Antriebssystem (40) nach Anspruch 1, wobei der akustische Oberflächenwellensensor (200) der Schubmessvorrichtung (172) ein piezoelektrisches Substrat (202), einen Eingangsinterdigitalwandler (208) an einem ersten Ende (204) des piezoelektrischen Substrats (202) und einen Ausgangsinterdigitalwandler (210) an einem zweiten Ende (206) des piezoelektrischen Substrats (202) umfasst.

3. Antriebssystem (40) nach Anspruch 2, wobei das piezoelektrische Substrat (202) des akustischen Oberflächenwellensensors (200) an dem Bauteil unter Verwendung eines haftenden Befestigungsmittels angebracht ist.

4. Antriebssystem (40) nach Anspruch 1, wobei das Fahrzeug ein Luftfahrzeug ist, wobei das Triebwerk ein Gasturbinentriebwerk (104) ist und wobei der Propulsor eine Propellerbaugruppe (102) ist.

5. Antriebssystem (40) nach Anspruch 4, wobei das Gasturbinentriebwerk (104) einen Flansch (160) und eine Welle umfasst, wobei die Propellerbaugruppe (102) an dem Flansch (160) des Gasturbinentriebwerks (104) angebracht ist, und
wobei der Dehnungssensor (174) der Schubmessvorrichtung (172) an mindestens einem von dem Flansch (160) des Gasturbinentriebwerks (104) oder der Welle des Gasturbinentriebwerks (104) montiert ist.

6. Antriebssystem (40) nach Anspruch 1, wobei das Triebwerk einen Strukturrahmen, eine Welle und ein Schublager umfasst, das mit der Welle betriebsfähig ist, wobei der Dehnungssensor der Schubmessvorrichtung an mindestens einem von der Welle oder dem Schublager montiert ist.

7. Antriebssystem (40) nach Anspruch 1, wobei die Schubmessvorrichtung (172) eine Vielzahl von Dehnungssensoren (174) umfasst.

8. Antriebssystem nach Anspruch 1, wobei der Dehnungssensor (174) der Schubmessvorrichtung (172) ausgestaltet ist, um einen effektiven Vortriebsschub, der von dem Propulsor während des Betriebs des Antriebssystems (40) erzeugt wird, durch direktes Messen einer Dehnung, die von dem durch den Propulsor erzeugten Schub verursacht wird, an dem Bauteil zu bestimmen.

9. Antriebssystem (40) nach Anspruch 1, wobei der Propulsor, das Triebwerk und die Triebwerklagerung (164) jeweils als ein Teil einer ersten Antriebsbaugruppe (42) ausgestaltet sind, wobei das Antriebssystem ferner umfasst:
eine zweite Antriebsbaugruppe (44), die einen Propulsor, ein Triebwerk und eine Triebwerklagerung (164) umfasst;
wobei der Dehnungssensor (174) ein erster Dehnungssensor ist, wobei die Schubmessvorrichtung (172) ferner einen zweiten Dehnungssensor umfasst, der an einem Bauteil von mindestens einem von dem Propulsor
oder dem Triebwerk der zweiten Antriebsbaugruppe (44) zum direkten Messen einer Dehnung, die von einem durch den Propulsor der zweiten Antriebsbaugruppe (44) während des Betriebs des Antriebssystems (40) erzeugten Schub verursacht wird, an dem Bauteil der zweiten Antriebsbaugruppe (44) montiert ist.

10. Verfahren für den Betrieb eines Antriebssystems eines Fahrzeugs, wobei das Antriebssystem einen Propulsor, ein Triebwerk, das mit dem Propulsor betriebsfähig ist und eine axiale Richtung definiert, und eine Triebwerklagerung zum Montieren des Triebwerks in oder an dem Fahrzeug umfasst, wobei das Verfahren umfasst:
Montieren eines Dehnungssensors (174) an einem Bauteil des Antriebssystems, wobei der Dehnungssensor (174) ein akustischer Oberflächenwellensensor (200) ist, der entlang einer Richtung eines von dem Propulsor zu dem Fahrzeug des Antriebssystems (40) definierten Schubweges ausgerichtet ist,
Messen einer axialen Dehnung auf entweder dem Bauteil von mindestens einem von dem Propulsor oder dem Triebwerk, das während des Betriebs des Antriebssystems mit dem Propulsor drehbar ist, oder einem Schublager des Triebwerks oder Propulsors unter Verwendung des Dehnungssensors (174) der Dehnungsmessvorrichtung; und
Bestimmen eines von dem Propulsor für das Fahrzeug erzeugten Schubs basierend auf der gemessenen Dehnung.

11. Verfahren nach Anspruch 10, ferner umfassend:
Betreiben des Propulsors zum Erzeugen eines Vortriebsschubs;
Unterstützen von mindestens einem von dem Propulsor
oder dem Triebwerk
mit dem Bauteil zum Übertragen des Vortriebsschubs auf das Fahrzeug; und
wobei das Messen der axialen Dehnung des Bauteils das Messen des axialen Schubs, der sich aus dem Übertragen des Vorwärtsschubs von dem Bauteil auf das Fahrzeug ergibt, an dem Bauteil umfasst.

12. Verfahren nach Anspruch 11, wobei der akustische Oberflächenwellensensor der Schubmessvorrichtung ein piezoelektrisches Substrat umfasst und wobei das Verfahren ferner umfasst:
Montieren des piezoelektrischen Substrats des akustischen Oberflächenwellensensors an dem Bauteil unter Verwendung eines haftenden Befestigungsmittels.

13. Verfahren nach Anspruch 12, wobei das Messen der axialen Dehnung an dem Bauteil das Messen der axialen Dehnung an dem Bauteil der ersten Antriebsbaugruppe umfasst, wobei das Bestimmen des von dem Propulsor für das Fahrzeug erzeugten Schubs das Bestimmen des von dem Propulsor der ersten Antriebsbaugruppe für das Fahrzeug erzeugten Schubs umfasst und wobei das Verfahren ferner umfasst:
Messen einer axialen Dehnung auf einem Bauteil von mindestens einem von dem Propulsor
oder dem Triebwerk der zweiten Antriebsbaugruppe unter Verwendung des zweiten akustischen Oberflächenwellensensors der Schubmessvorrichtung; und
Bestimmen eines von dem Propulsor der zweiten Antriebsbaugruppe für das Fahrzeug erzeugten Schubs basierend auf der axialen Dehnung.

14. Verfahren nach Anspruch 13, ferner umfassend:
Abwandeln einer Schubsymmetrie des Fahrzeugs basierend auf dem bestimmten, von dem Propulsor der ersten Antriebsbaugruppe erzeugten Schub und dem bestimmten, von dem Propulsor der zweiten Antriebsbaugruppe erzeugten Schub.

## Revendications

1. Système de propulsion (40) pour un véhicule comprenant :
un propulseur pour générer une poussée pour le véhicule ;
un moteur fonctionnant avec le propulseur pour entraîner le propulseur ;
un support moteur (164) pour monter le moteur dans ou sur le véhicule ; et
un dispositif de mesure de poussée (172) comprenant un capteur de déformation (174) monté sur un composant structurel d'au moins l'un parmi le propulseur ou le moteur apte à tourner avec le propulseur pendant un fonctionnement du système de propulsion, ou un palier de poussée du moteur ou du propulseur, pour mesurer directement une déformation provoquée par la poussée générée par le propulseur pendant un fonctionnement du système de propulsion (40), dans lequel le capteur de déformation (174) est un capteur d'ondes acoustiques de surface (200), dans lequel le système de propulsion (40) définit une trajectoire de poussée du propulseur au véhicule, et dans lequel le capteur d'ondes acoustiques de surface (200) est orienté généralement le long d'une direction de la trajectoire de poussée.

2. Système de propulsion (40) selon la revendication 1, dans lequel le capteur d'ondes acoustiques de surface (200) du dispositif de mesure de poussée (172) comprend un substrat piézoélectrique (202), un transducteur interdigité d'entrée (208) au niveau d'une première extrémité (204) du substrat piézoélectrique (202) et un transducteur interdigité de sortie (210) au niveau d'une seconde extrémité (206) du substrat piézoélectrique (202).

3. Système de propulsion (40) selon la revendication 2, dans lequel le substrat piézoélectrique (202) du capteur d'ondes acoustiques de surface (200) est fixé au composant structurel à l'aide d'une fixation adhésive.

4. Système de propulsion (40) selon la revendication 1, dans lequel le véhicule est un véhicule aéronautique, dans lequel le moteur est un moteur à turbine à gaz (104), et dans lequel le propulseur est un ensemble hélice (102).

5. Système de propulsion (40) selon la revendication 4, dans lequel le moteur à turbine à gaz (104) comprend une bride (160) et un arbre, dans lequel l'ensemble hélice (102) est fixé à la bride (160) du moteur à turbine à gaz (104), et dans lequel le capteur de déformation (174) du dispositif de mesure de poussée (172) est monté sur au moins l'un parmi la bride (160) du moteur à turbine à gaz (104) ou l'arbre du moteur à turbine à gaz (104).

6. Système de propulsion (40) selon la revendication 1, dans lequel le moteur comprend un cadre structurel, un arbre et un palier de poussée fonctionnant avec l'arbre, dans lequel le capteur de déformation du dispositif de mesure de poussée est monté sur au moins l'un parmi l'arbre ou le palier de poussée.

7. Système de propulsion (40) selon la revendication 1, dans lequel le dispositif de mesure de poussée (172) comprend une pluralité de capteurs de déformation (174).

8. Système de propulsion selon la revendication 1, dans lequel le capteur de déformation (174) du dispositif de mesure de poussée (172) est configuré pour déterminer une poussée vers l'avant efficace générée par le propulseur pendant un fonctionnement du système de propulsion (40) par la mesure directe d'une déformation sur le composant structurel provoquée par la poussée générée par le propulseur.

9. Système de propulsion (40) selon la revendication 1, dans lequel le propulseur, le moteur et le support moteur (164) sont chacun configurés comme faisant partie d'un premier ensemble de propulsion (42), dans lequel le système de propulsion comprend en outre :
un second ensemble de propulsion (44) comprenant un propulseur, un moteur et un support moteur (164) ;
dans lequel le capteur de déformation (174) est un premier capteur de déformation, dans lequel le dispositif de mesure de poussée (172) comprend en outre un second capteur de déformation monté sur un composant structurel d'au moins l'un parmi le propulseur ou le moteur du second ensemble de propulsion (44) pour mesurer directement une déformation sur le composant structurel du second ensemble de propulsion (44) provoquée par une poussée générée par le propulseur du second ensemble de propulsion (44) pendant un fonctionnement du système de propulsion (40).

10. Procédé pour la mise en fonctionnement d'un système de propulsion d'un véhicule, le système de propulsion comprenant un propulseur, un moteur fonctionnant avec le propulseur et définissant une direction axiale, et un support moteur pour monter le moteur dans ou sur le véhicule, le procédé comprenant :
le montage d'un capteur de déformation (174) sur un composant structurel du système de propulsion, dans lequel ledit capteur de déformation (174) est un capteur d'ondes acoustiques de surface (200) orienté le long d'une direction d'une trajectoire de poussée définie du propulseur au véhicule du système de propulsion (40),
la mesure d'une déformation axiale soit sur ledit composant structurel d'au moins l'un parmi le propulseur ou le moteur qui est apte à tourner avec le propulseur pendant un fonctionnement du système de propulsion, soit sur un palier de poussée du moteur ou du propulseur, à l'aide dudit capteur de déformation (174) du dispositif de mesure de poussée ; et
la détermination d'une poussée générée par le propulseur pour le véhicule sur la base de la déformation mesurée.

11. Procédé selon la revendication 10, qui comprend en outre :
la mise en fonctionnement du propulseur pour générer une poussée vers l'avant ;
le support d'au moins l'un parmi le propulseur ou le moteur avec le composant structurel pour transférer la poussée vers l'avant au véhicule ; et
dans lequel la mesure de la déformation axiale sur le composant structurel comprend la mesure de la déformation axiale sur le composant structurel résultant du composant structurel transférant la poussée vers l'avant au véhicule.

12. Procédé selon la revendication 11, dans lequel le capteur d'ondes acoustiques de surface du dispositif de mesure de poussée comprend un substrat piézoélectrique, et dans lequel le procédé comprend en outre :
le montage du substrat piézoélectrique du capteur d'ondes acoustiques de surface sur le composant structurel à l'aide d'une fixation adhésive.

13. Procédé selon la revendication 12, dans lequel la mesure de la déformation axiale sur le composant structurel comprend la mesure de la déformation axiale sur le composant structurel du premier ensemble de propulsion, dans lequel la détermination de la poussée générée par le propulseur pour le véhicule comprend la détermination de la poussée générée par le propulseur du premier ensemble de propulsion pour le véhicule, et dans lequel le procédé comprend en outre :
la mesure d'une déformation axiale sur un composant structurel d'au moins l'un parmi le propulseur ou le moteur du second ensemble de propulsion à l'aide du second capteur d'ondes acoustiques de surface du dispositif de mesure de poussée ; et
la détermination d'une poussée générée par le propulseur du second ensemble de propulsion pour le véhicule sur la base de la déformation axiale mesurée.

14. Procédé selon la revendication 13, comprenant en outre :
la modification d'une symétrie de poussée du véhicule sur la base de la poussée déterminée générée par le propulseur du premier ensemble de propulsion et de la poussée déterminée générée par le propulseur du second ensemble de propulsion.
